(19) Europäisches Patentamt / European Patent Office / Office européen des brevets

(11) EP 3 185 988 B1

(12) **EUROPÄISCHE PATENTSCHRIFT**

(45) Veröffentlichungstag und Bekanntmachung des Hinweises auf die Patenterteilung:
**17.10.2018 Patentblatt 2018/42**

(21) Anmeldenummer: **15753038.7**

(22) Anmeldetag: **20.08.2015**

(51) Int Cl.:
***B01D 53/14*** *(2006.01)* ***C10L 3/10*** *(2006.01)*

(86) Internationale Anmeldenummer:
**PCT/EP2015/069109**

(87) Internationale Veröffentlichungsnummer:
**WO 2016/030262 (03.03.2016 Gazette 2016/09)**

(54) **ABSORPTIONSMITTEL ZUR SELEKTIVEN ENTFERNUNG VON SCHWEFELWASSERSTOFF AUS EINEM FLUIDSTROM**

ABSORBENT FOR THE SELECTIVE REMOVAL OF HYDROGEN SULPHIDE FROM A FLUID STREAM

MOYEN D'ABSORPTION DESTINÉ À L'ÉLIMINATION SÉLECTIVE D'HYDROGÈNE SULFURÉ D'UN FLUX DE FLUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.08.2014 EP 14182112**

(43) Veröffentlichungstag der Anmeldung:
**05.07.2017 Patentblatt 2017/27**

(73) Patentinhaber: **BASF SE**
**67056 Ludwigshafen am Rhein (DE)**

(72) Erfinder:
- **VORBERG, Gerald**
  **67346 Speyer (DE)**
- **NOTZ, Ralf**
  **67069 Ludwigshafen (DE)**
- **INGRAM, Thomas**
  **68163 Mannheim (DE)**
- **SIEDER, Georg**
  **67098 Bad Dürkheim (DE)**
- **KATZ, Torsten**
  **67434 Neustadt (DE)**

(56) Entgegenhaltungen:
**WO-A2-2007/134994 US-A- 4 892 674**
**US-A1- 2010 288 125**

- **LU J G ET AL: "Selective absorption of H2S from gas mixtures into aqueous solutions of blended amines of methyldiethanolamine and 2-tertiarybutylamino-2-ethoxyethanol in a packed column", SEPARATION AND PURIFICATION TECHNOLOGY, ELSEVIER SCIENCE, AMSTERDAM, NL, Bd. 52, Nr. 2, 1. Dezember 2006 (2006-12-01), Seiten 209-217, XP028035520, ISSN: 1383-5866, DOI: 10.1016/J.SEPPUR.2006.04.003 [gefunden am 2006-12-01] in der Anmeldung erwähnt**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Absorptionsmittel zur Entfernung von sauren Gasen aus Fluidströmen, insbesondere zur selektiven Entfernung von Schwefelwasserstoff, und ein Verfahren zur Entfernung saurer Gase aus einem Fluidstrom, insbesondere zur selektiven Entfernung von Schwefelwasserstoff gegenüber Kohlendioxid.

Die Entfernung von Sauergasen, wie z.B. $CO_2$, $H_2S$, $SO_2$, $CS_2$, HCN, COS oder Merkaptanen, aus Fluidströmen wie Erdgas, Raffineriegas oder Synthesegas, ist aus unterschiedlichen Gründen von Bedeutung. Der Gehalt an Schwefelverbindungen von Erdgas muss durch geeignete Aufbereitungsmaßnahmen unmittelbar an der Erdgasquelle reduziert werden, denn die Schwefelverbindungen bilden in dem vom Erdgas häufig mitgeführten Wasser Säuren, die korrosiv wirken. Für den Transport des Erdgases in einer Pipeline oder die Weiterverarbeitung in einer Erdgasverflüssigungsanlage (LNG = liquefied natural gas) müssen daher vorgegebene Grenzwerte der schwefelhaltigen Verunreinigungen eingehalten werden. Darüber hinaus sind zahlreiche Schwefelverbindungen bereits in niedrigen Konzentrationen übel riechend und toxisch.

Kohlendioxid muss unter anderem aus Erdgas entfernt werden, weil eine hohe Konzentration an $CO_2$ den Brennwert des Gases reduziert. Außerdem kann $CO_2$ in Verbindung mit Feuchtigkeit, die in den Fluidströmen häufig mitgeführt wird, zu Korrosion an Leitungen und Armaturen führen. Wird Erdgas für den Transport zu Flüssigerdgas (LNG = Liquid Natural Gas) verflüssigt, muss das $CO_2$ zuvor weitgehend entfernt werden. Bei der Temperatur des Flüssigerdgases (etwa - 162 °C) würde das $CO_2$ resublimieren und Anlagenteile beschädigen. Andererseits kann eine zu geringe Konzentration an $CO_2$ ebenfalls unerwünscht sein, z. B. bei der Einspeisung in das Erdgasnetz, da dadurch der Brennwert des Gases zu hoch sein kann.

Zur Entfernung von Sauergasen werden Wäschen mit wässrigen Lösungen anorganischer oder organischer Basen eingesetzt. Beim Lösen von Sauergasen in dem Absorptionsmittel bilden sich mit den Basen Ionen. Das Absorptionsmittel kann durch Entspannen auf einen niedrigeren Druck und/oder Strippen regeneriert werden, wobei die ionischen Spezies zu Sauergasen zurück reagieren und/oder mittels Dampf abgestrippt werden. Nach dem Regenerationsprozess kann das Absorptionsmittel wiederverwendet werden.

Ein Verfahren, bei dem alle sauren Gase, insbesondere $CO_2$ und $H_2S$, weitestgehend entfernt werden, wird als "Total-Absorption" bezeichnet. In bestimmten Fällen kann es dagegen wünschenswert sein, bevorzugt $H_2S$ vor $CO_2$ zu absorbieren, z.B. um ein Brennwert-optimiertes $CO_2/H_2S$-Verhältnis für eine nachgeschaltete Claus-Anlage zu erhalten. In diesem Fall spricht man von einer "selektiven Wäsche". Ein ungünstiges $CO_2/H_2S$-Verhältnis kann die Leistung und Effizienz der Claus-Anlage durch Bildung von $COS/CS_2$ und Verkokung des Claus-Katalysators oder durch einen zu geringen Heizwert beeinträchtigen.

Stark sterisch gehinderte sekundäre Amine, wie 2-(2-tert-Butylaminoethoxy)ethanol, und tertiäre Amine, wie Methyldiethanolamin (MDEA), zeigen kinetische Selektivität für $H_2S$ gegenüber $CO_2$. Diese Amine reagieren nicht direkt mit $CO_2$; vielmehr wird $CO_2$ in einer langsamen Reaktion mit dem Amin und mit Wasser zu Bicarbonat umgesetzt - im Gegensatz dazu reagiert $H_2S$ in wässrigen Aminlösungen sofort. Derartige Amine eignen sich daher insbesondere für eine selektive Entfernung von $H_2S$ aus Gasgemischen, die $CO_2$ und $H_2S$ enthalten.

Die selektive Entfernung von Schwefelwasserstoff findet vielfach Anwendung bei Fluidströmen mit niedrigen Sauergas-Partialdrücken, wie z. B. in Tailgas oder bei der Sauergasanreicherung (Acid Gas Enrichment, AGE), beispielsweise zur Anreicherung von $H_2S$ vor dem Claus-Prozess.

So wurde in der US 4,471,138 gezeigt, dass stark sterisch gehinderte sekundäre Amine, wie 2-(2-tert-Butylaminoethoxy)ethanol, auch in Kombination mit weiteren Aminen wie Methyldiethanolamin, eine deutlich höhere $H_2S$-Selektivität als Methyldiethanolamin aufweisen. Dieser Effekt wurde unter anderem von Lu et al. in Separation and Purification Technology, 2006, 52, 209-217 bestätigt. Die EP 0 084 943 offenbart die Verwendung von tertiären Alkanolaminen und stark sterisch gehinderten sekundären und tertiären Alkanolaminen in Absorptionslösungen zur selektiven Entfernung von Schwefelwasserstoff gegenüber Kohlendioxid aus Gasströmen.

Die EP 134 948 beschreibt ein Absorptionsmittel, das ein alkalisches Material und eine Säure mit einem pKs von 6 oder weniger umfasst. Bevorzugte Säuren sind Phosphorsäure, Ameisensäure oder Salzsäure. Der Säurezusatz soll insbesondere das Strippen $H_2S$ enthaltender saurer Gase effizienter machen.

Die US 4,618,481 offenbart die Entfernung von Schwefelwasserstoff aus Fluidströmen mit einer Absorptionslösung, die ein stark sterisch gehindertes Amin und ein Aminsalz enthält. Die US 4,892,674 offenbart die Entfernung von Schwefelwasserstoff aus Fluidströmen mit einer Absorptionslösung, die ein Amin und ein stark sterisch gehindertes Aminosalz und/oder eine sterisch gehinderte Aminosäure enthält. Das Dokument lehrt unter anderem anhand von Fig. 3, dass die $H_2S$-Selektivität von MDEA durch Zusatz von 2-(2-tert-Butylaminoethoxy)ethanol-Sulfat erhöht werden kann.

Auch bei der Erdgasaufbereitung (Natural Gas Treatment) für Pipelinegas kann eine selektive Entfernung von $H_2S$ gegenüber $CO_2$ erwünscht sein. Der Absorptionsschritt bei der Erdgasaufbereitung erfolgt üblicherweise bei hohen Drücken von etwa 20 bis 130 bar (absolut). Es liegen in der Regel deutlich höhere Sauergas-Partialdrücke gegenüber beispielsweise der Tailgas-Behandlung vor, nämlich z.B. mindestens 0,2 bar für $H_2S$ und mindestens 1 bar für $CO_2$.

Ein Anwendungs-Beispiel in diesem Druckbereich wird in US 4,101,633 offenbart, worin ein Verfahren zur

Entfernung von Kohlendioxid aus Gasgemischen beschrieben ist. Es wird ein Absorptionsmittel verwendet, welches mindestens 50% eines sterisch gehinderten Alkanolamins und mindestens 10% eines tertiären Aminoalkohols umfasst. Die US 4,094,957 offenbart ein Anwendungs-Beispiel in diesem Druckbereich, worin ein Verfahren zur Entfernung von Kohlendioxid aus einem Gasgemisch beschrieben ist. Es wird ein Absorptionsmittel verwendet, welches ein basisches Alkalimetallsalz oder -hydroxid, mindestens ein sterisch gehindertes Amin und eine $C_{4-8}$-Aminosäure umfasst.

In vielen Fällen strebt man bei der Erdgasaufbereitung eine gleichzeitige Entfernung von $H_2S$ und $CO_2$ an, wobei vorgegebene $H_2S$-Grenzwerte eingehalten werden müssen, aber eine vollständige Entfernung von $CO_2$ nicht erforderlich ist. Die für Pipelinegas typische Spezifikation erfordert eine Sauergasentfernung auf etwa 1,5 bis 3,5 Vol.-% $CO_2$ und weniger als 4 vppm $H_2S$. In diesen Fällen ist eine maximale $H_2S$-Selektivität nicht erwünscht.

Die US 2013/0243676 beschreibt ein Verfahren zur Absorption von $H_2S$ und $CO_2$ aus einem Gasgemisch mit einem Absorptionsmittel, welches einen stark sterisch gehinderten tertiären Etheramintriethylenglykolalkohol oder Derivate davon sowie ein flüssiges Amin umfasst.

Die US 2010/288125 beschreibt ein Absorptionsmittel zur selektiven Entfernung von $H_2S$ aus einem Fluidstrom, umfassend eine wässrige Lösung eines tertiären Amins und/oder eines sterisch gehinderten sekundären Amins und einer Säure.

Der Erfindung liegt die Aufgabe zu Grunde, ein Absorptionsmittel und Verfahren anzugeben, das die Einstellung einer definierten $H_2S$-Selektivität bei Drücken erlaubt, wie sie typischerweise in der Erdgasaufbereitung für Pipelinegas vorliegen. Die erforderliche Regenerationsenergie soll gegenüber $H_2S$-selektiven Absorptionsmitteln nicht wesentlich erhöht sein.

Die Aufgabe wird gelöst durch ein Absorptionsmittel zur selektiven Entfernung von Schwefelwasserstoff aus einem unter Gasen ausgewählten Fluidstrom, das eine wässrige Lösung umfasst, welche umfasst:

a) ein tertiäres Amin;

b) ein sterisch gehindertes sekundäres Amin der allgemeinen Formel (I)

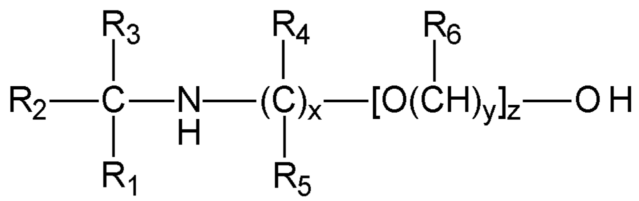

(I),

worin $R_1$ und $R_2$ jeweils unabhängig voneinander ausgewählt sind unter $C_{1-4}$-Alkyl und $C_{1-4}$-Hydroxyalkyl; $R_3$, $R_4$, $R_5$ und $R_6$ jeweils unabhängig voneinander ausgewählt sind unter Wasserstoff, $C_{1-4}$-Alkyl und $C_{1-4}$-Hydroxyalkyl, mit der Maßgabe, dass wenigstens ein Rest $R_4$ und/oder $R_5$ am Kohlenstoffatom, welches direkt an das Stickstoffatom gebunden ist, für $C_{1-4}$-Alkyl oder $C_{1-4}$-Hydroxyalkyl steht, wenn $R_3$ Wasserstoff ist; x und y ganze Zahlen von 2 bis 4 sind und z eine ganze Zahl von 1 bis 4 ist;
wobei das molare Verhältnis von b) zu a) im Bereich von 0,3 bis 0,7 liegt und

c) eine Säure in einer Menge, gerechnet als Neutralisationsäquivalente bezogen auf die protonierbaren Stickstoffatome in a) und b), von 1,0 bis 9,0%.

Zwischen der Säure und den Aminen gemäß a) und/oder b) bilden sich Protonierungsgleichgewichte aus. Die Lage der Gleichgewichte ist temperaturabhängig und das Gleichgewicht ist bei höheren Temperaturen zum freien Oxoniumion und/oder dem Aminsalz mit der niedrigeren Protonierungsenthalpie verschoben. Amine der allgemeinen Formel (I) zeigen eine besonders ausgeprägte Temperaturabhängigkeit des pKs-Wertes. Dies hat zur Folge, dass bei relativ niedrigeren Temperaturen, wie sie im Absorptionsschritt herrschen, der höhere pH-Wert die effiziente Sauergas-Absorption fördert, während bei relativ höheren Temperaturen, wie sie im Desorptionsschritt herrschen, der niedrigere pH-Wert die Freisetzung der absorbierten Sauergase unterstützt. Es wird erwartet, dass eine große pH-Wertdifferenz des Absorptionsmittels zwischen Absorptions- und Desorptionstemperatur eine niedrigere Regenerationsenergie bedingt.

Durch Variation des molaren Verhältnisses von b) zu a) innerhalb der angegebenen Grenzen kann die $H_2S$-Selektivität den jeweiligen Anforderungen angepasst werden. Trotz verringerter $H_2S$-Selektivität ist die Regenerationsenergie gleich der oder geringer als die eines $H_2S$-selektiven Absorptionsmittels.

Im Allgemeinen beträgt die Gesamtkonzentration von a) und b) in der wässrigen Lösung 10 bis 60 Gew.-%, bevorzugt 20 bis 50 Gew.-%, besonders bevorzugt 30 bis 50 Gew.-%.

Die wässrige Lösung enthält Säure in einer Menge, gerechnet als Neutralisationsäquivalente bezogen auf die protonierbaren Stickstoffatome in a) und b), von 1,0 bis 9,0%, bevorzugt 2,5 bis 6,5%.

Unter einem "Neutralisationsäquivalent" wird der fiktive Bruchteil eines Säuremoleküls verstanden, der bei der Neutralisationsreaktion in wässriger Lösung ein Proton abzugeben vermag. Beispielsweise entspricht ein Molekül $H_2SO_4$ zwei Neutralisationsäquivalenten, ein Molekül $H_3PO_4$ drei Neutralisationsäquivalenten.

Der Begriff "protonierbare Stickstoffatome" bezieht sich auf die Summe der in den Aminen gemäß a) und b) enthaltenen Stickstoffatome, welche in wässriger Lösung protoniert werden können. Dies sind in der Regel Aminogruppen-Stickstoffatome.

Es wurde gefunden, dass das Absorptionsmittel innerhalb der oben definierten Grenzen der Zusammensetzung Stabilitätsgrenzen unterliegt. Höhere Säuremengen als angegeben oder ein größeres molares Verhältnis von b) zu a) führen zu einer Verschlechterung der Stabilität und beschleunigter Zersetzung des Absorptionsmittels bei erhöhter Temperatur.

Das erfindungsgemäße Absorptionsmittel enthält als Komponente a) wenigstens ein tertiäres Amin. Unter einem "tertiären Amin" werden Verbindungen mit wenigstens einer tertiären Aminogruppe verstanden. Das tertiäre Amin enthält vorzugsweise ausschließlich tertiäre Aminogruppen, d.h. es enthält neben wenigstens einer tertiären Aminogruppe keine primären oder sekundären Aminogruppen. Das tertiäre Amin ist vorzugsweise ein Monoamin. Das tertiäre Amin verfügt vorzugsweise nicht über saure Gruppen, wie insbesondere Phosphonsäure-, Sulfonsäure- und/oder Carbonsäuregruppen.

Zu den geeigneten tertiären Aminen a) zählen insbesondere:

1. Tertiäre Alkanolamine wie
Bis(2-hydroxyethyl)-methylamin (Methyldiethanolamin, MDEA), Tris(2-hydroxyethyl)amin (Triethanolamin, TEA), Tributanolamin, 2-Diethylaminoethanol (Diethylethanolamin, DEEA), 2-Dimethylaminoethanol (Dimethylethanolamin, DMEA), 3-Dimethylamino-1-propanol (N,N-Dimethylpropanolamin), 3-Diethylamino-1-propanol, 2-Diisopropylaminoethanol (DIEA), N,N-Bis(2-hydroxypropyl)methylamin (Methyldiisopropanolamin, MDIPA);

2. Tertiäre Aminoether wie
3-Methoxypropyldimethylamin;

3. Tertiäre Polyamine, z. B. bistertiäre Diamine wie
N,N,N',N'-Tetramethylethylendiamin, N,N-Diethyl-N',N'-dimethylethylendiamin, N,N,N',N'-Tetraethylethylendiamin, N,N,N',N'-Tetramethyl-1,3-propandiamin (TMPDA), N,N,N',N'-Tetraethyl-1,3-propandiamin (TEPDA), N,N-Dimethyl-N',N'-diethylethylen-diamin (DMDEEDA), 1-Dimethylamino-2-dimethylaminoethoxyethan (Bis[2-(dimethylamino)ethyl]ether);
und Gemische davon.

Tertiäre Alkanolamine, d.h. Amine mit wenigstens einer an das Stickstoffatom gebundenen Hydroxyalkylgruppe, sind im Allgemeinen bevorzugt. Besonders bevorzugt ist Methyldiethanolamin (MDEA).

Das erfindungsgemäße Absorptionsmittel enthält ein sterisch gehindertes sekundäres Amin der Formel (I). In der Formel (I) stehen $R_1$, $R_2$ und $R_3$ vorzugsweise für Methyl oder Ethyl; $R_4$, $R_5$ und $R_6$ stehen vorzugsweise für Methyl oder Wasserstoff. Geeignete sterisch gehinderte sekundäre Amine umfassen sekundäre Aminoetheralkanole, wie zum Beispiel die in der US 4,471,138 offenbarten Verbindungen. Die sekundären Aminoetheralkanole umfassen beispielsweise 2-(2-tert-Butylaminoethoxy)ethanol (TBAEE), 2-(2-tert-Butylamino)propoxyethanol, tert-Amylaminoethoxyethanol, (1-Methyl-1-ethylpropylamino)ethoxyethanol, 2-2-(2-iso-Propylamino)propoxyethanol und Gemische davon. Bevorzugt ist 2-(2-tert-Butylaminoethoxy)ethanol (TBAEE).

Amine der Formel (I) umfassen solche, die im Stand der Technik als stark sterisch gehinderte Amine bezeichnet werden und einen sterischen Parameter (Taft-Konstante) $E_S$ von mehr als 1,75 aufweisen.

Das erfindungsgemäße Absorptionsmittel enthält wenigstens eine Säure. Die Säure ist geeigneterweise unter Protonensäuren (Brönstedt-Säuren), vorzugsweise mit einem pKs-Wert von weniger als 6, insbesondere weniger als 5, ausgewählt. Bei Säuren mit mehreren Dissoziationsstufen und demzufolge mehreren pKs-Werten ist dieses Erfordernis erfüllt, wenn einer der pKs-Werte im angegebenen Bereich liegt.

Die Säure ist ausgewählt unter organischen und anorganischen Säuren. Geeignete organische Säuren umfassen beispielsweise Phosphonsäuren, Sulfonsäuren, Carbonsäuren und Aminosäuren. In bestimmten Ausführungsformen ist die Säure eine mehrbasische Säure.

Geeignete Säuren sind beispielsweise

Mineralsäuren, wie Salzsäure, Schwefelsäure, Amidoschwefelsäure, Phosphorsäure, Partialester der Phosphorsäure, z. B. Mono- und Dialkyl- und -arylphosphate wie Tridecylphosphat, Dibutylphosphat, Diphenylphosphat und Bis-(2-ethylhexyl)phosphat; Borsäure;
Carbonsäuren, beispielsweise gesättigte aliphatische Monocarbonsäuren wie Ameisensäure, Essigsäure, Propionsäure, Buttersäure, Isobuttersäure, Valeriansäure, Isovaleriansäure, Pivalinsäure, Capronsäure, n-Heptansäure, Caprylsäure, 2-Ethylhexansäure, Pelargonsäure, Capronsäure, Neodecansäure, Undecansäure, Laurinsäure, Tridecansäure, Myristinsäure, Pentadecansäure, Palmitinsäure, Margarinsäure, Stearinsäure, Isostearinsäure, Arachinsäure, Behensäure; gesättigte aliphatische Polycarbonsäuren wie Oxalsäure, Malonsäure, Bernsteinsäure, Glutarsäure, Adipinsäure, Pimelinsäure, Korksäure, Azelainsäure, Sebacinsäure, Dodecandisäure; cycloaliphatische Mono- und Polycarbonsäuren wie Cyclohexancarbonsäure, Hexahydrophthalsäure, Tetrahydrophthalsäure, Harzsäuren, Naphthensäuren; aliphatische Hydroxycarbonsäuren wie Glykolsäure, Milchsäure, Mandelsäure, Hydroxybuttersäure, Weinsäure, Apfelsäure, Citronensäure; halogenierte aliphatische Carbonsäuren wie Trichloressigsäure oder 2-Chlorpropionsäure; aromatische Mono- und Polycarbonsäuren wie Benzoesäure, Salicylsäure, Gallussäure, die stellungsisomeren Tolylsäuren, Methoxybenzoesäuren, Chlorbenzoesäuren, Nitrobenzoesäuren, Phthalsäure, Terephthalsäure, Isophthalsäure; technische Carbonsäure-Gemische wie zum Beispiel Versatic-Säuren;
Sulfonsäuren, wie Methylsulfonsäure, Butylsulfonsäure, 3-Hydroxypropylsulfonsäure, Sulfoessigsäure, Benzolsulfonsäure, p-Toluolsulfonsäure, p-Xylolsulfonsäure, 4-Dodecylbenzolsulfonsäure, 1-Naphtalinsulfonsäure, Dinonylnaphthalinsulfonsäure und Dinonylnaphthalin- disulfonsäure, Trifluormethyl- oder Nonafluor-n-butylsulfonsäure, Camphersulfonsäure, 2-(4-(2-Hydroxyethyl)-1-piperazinyl)-ethansulfonsäure (HEPES);
organische Phosphonsäuren, beispielsweise Phosphonsäuren der Formel II

$$R_{31}\text{-}PO_3H \qquad (VIII)$$

worin $R_{31}$ für $C_{1-18}$-Alkyl steht, das gegebenenfalls durch bis zu vier Substituenten substituiert ist, die unabhängig ausgewählt sind unter Carboxy, Carboxamido, Hydroxy und Amino.

Hierzu zählen Alkylphosphonsäuren, wie Methylphosphonsäure, Propylphosphonsäure, 2-Methyl-propylphosphonsäure, t-Butylphosphonsäure, n-Butylphosphonsäure, 2,3-Dimethylbutylphosphonsäure, Oktylphosphonsäure; Hydroxyalkylphosphonsäuren, wie Hydroxymethylphosphonsäure, 1-Hydroxyethylphosphonsäure, 2-Hydroxyethylphosphonsäure; Arylphosphonsäuren wie Phenylphosphonsäure, Toluylphosphonsäure, Xylylphosphonsäure, Aminoalkylphosphonsäuren wie Aminomethylphosphonsäure, 1-Aminoethylphosphonsäure, 1-Dimethylaminoethylphosphonsäure, 2-Aminoethylphosphonsäure, 2-(N-Methylamino)ethylphosphonsäure, 3-Aminopropylphosphonsäure, 2-Aminopropylphosphonsäure, 1-Aminopropylphosphonsäure, 1-Aminopropyl-2-chlorpropylphosphonsäure, 2-Aminobutylphosphonsäure, 3-Aminobutylphosphonsäure, 1-Aminobutylphosphonsäure, 4-Aminobutylphosphonsäure, 2-Aminopentylphosphonsäure, 5-Aminopentylphosphonsäure, 2-Aminohexylphosphonsäure, 5-Aminohexylphosphonsäure, 2-Aminooctylphosphonsäure, 1-Aminooctylphosphonsäure, 1-Aminobutylphosphonsäure; Amidoalkylphosphonsäuren wie 3-Hydroxymethylamino-3-oxopropylphosphonsäure; und Phosphonocarbonsäuren wie 2-Hydroxyphosphonoessigsäure und 2-Phosphonobutan-1,2,4-tricarbonsäure.

Phosphonsäuren der Formel III

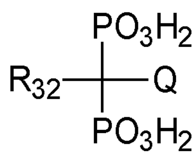

(III)

worin $R_{32}$ für H oder $C_{1-6}$-Alkyl steht, Q für H, OH oder $NY_2$ steht und Y für H oder $CH_2PO_3H_2$ steht, wie 1-Hydroxyethan-1,1-diphosphonsäure;
Phosphonsäuren der Formel IV

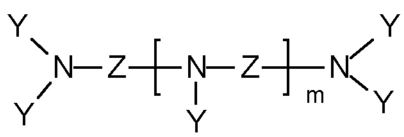

(IV)

worin Z für $C_{2-6}$-Alkylen, Cycloalkandiyl, Phenylen, oder $C_{2-6}$-Alkylen, das durch Cycloalkandiyl oder Phenylen unterbrochen ist, steht, Y für $CH_2PO_3H_2$ steht und m für 0 bis 4 steht, wie Ethylendiamin-tetra(methylenphosphonsäure), Diethylentriamin-penta(methylenphosphonsäure) und Bis(hexamethylen)triamin-penta(methylen-phosphonsäure);

Phosphonsäuren der Formel V

$$R_{33}\text{-}NY_2 \qquad (V)$$

worin $R_{33}$ für $C_{1-6}$-Alkyl, $C_{2-6}$-Hydroxyalkyl oder Y steht und Y für $CH_2PO_3H_2$ steht, wie Nitrilo-tris(methylenphosphonsäure) und 2-Hydroxyethyliminobis(methylenphosphonsäure);
tertiären Aminocarbonsäuren, d.h. Aminocarbonsäuren mit tertiären Aminogruppen, sowie N-sec-Alkyl-aminocarbonsäuren und N-tert-Alkyl-aminocarbonsäuren, d.h. Aminosäuren mit oder Aminogruppen, welche mindestens ein sekundäres oder tertiäres Kohlenstoffatom in unmittelbarer Nachbarschaft zur Aminogruppe aufweisen, wie
α-Aminosäuren mit tertiären Aminogruppen oder Aminogruppen, welche mindestens ein sekundäres oder tertiäres Kohlenstoffatom in unmittelbarer Nachbarschaft zur Aminogruppe aufweisen, wie N,N-Dimethylglycin (Dimethylaminoessigsäure), N,N-Diethylglycin, Alanin (2-Aminopropionsäure), N-Methylalanin (2-(Methylamino)-propionsäure), N,N-Dimethylalanin, N-Ethylalanin, 2-Methylalanin (2-Aminoisobuttersäure), Leucin (2-Amino-4-methyl-pentan-1-säure), N-Methylleucin, N,N-Dimethylleucin, Isoleucin (1-Amino-2-methylpentansäure), N-Methylisoleucin, N,N-Dimethylisoleucin, Valin (2-Aminoisovaleriansäure), α-Methylvalin (2-Amino-2-methylisovaleriansäure), N-Methylvalin (2-Methylaminoisovaleriansäure), N,N-Dimethylvalin, Prolin (Pyrrolidin-2-carbonsäure), N-Methylprolin, N-Methylserin, N,N-Dimethylserin, 2-(Methylamino)-isobuttersäure, Piperidin-2-carbonsäure, N-Methyl-piperidin-2-carbonsäure,
β-Aminosäuren mit tertiären Aminogruppen oder Aminogruppen, welche mindestens ein sekundäres oder tertiäres Kohlenstoffatom in unmittelbarer Nachbarschaft zur Aminogruppe aufweisen, wie 3-Dimethylaminopropionsäure, N-Methyliminodipropionsäure, N-Methyl-piperidin-3-carbonsäure,
γ-Aminosäuren mit tertiären Aminogruppen oder Aminogruppen, welche mindestens ein sekundäres oder tertiäres Kohlenstoffatom in unmittelbarer Nachbarschaft zur Aminogruppe aufweisen, wie 4-Dimethylaminobuttersäure,
oder Aminocarbonsäuren mit tertiären Aminogruppen oder Aminogruppen, welche mindestens ein sekundäres oder tertiäres Kohlenstoffatom in unmittelbarer Nachbarschaft zur Aminogruppe aufweisen, wie N-Methyl-piperidin-4-carbonsäure.

Unter den anorganischen Säuren sind Phosphorsäure und Schwefelsäure bevorzugt.

Unter den Carbonsäuren sind Ameisensäure, Essigsäure, Benzoesäure, Bernsteinsäure und Adipinsäure bevorzugt.

Unter den Sulfonsäuren sind Methansulfonsäure, p-Toluolsulfonsäure und 2-(4-(2-Hydroxyethyl)-1-piperazinyl)-ethansulfonsäure (HEPES) bevorzugt.

Unter den Phosphonsäuren sind 2-Hydroxyphosphonoessigsäure, 2-Phosphonobutan-1,2,4-tricarbonsäure, 1-Hydroxyethan-1,1-diphosphonsäure, Ethylendiamin-tetra-(methylenphosphonsäure), Diethylentriamin-penta(methylenphosphonsäure), Bis(hexamethylen)triamin-penta(methylenphosphonsäure) (HDTMP) und Nitrilo-tris(methylenphosphonsäure) bevorzugt, wovon 1-Hydroxyethan-1,1-diphosphonsäure besonders bevorzugt ist.

Unter den Aminocarbonsäuren mit tertiären Aminogruppen oder Aminogruppen, welche mindestens ein sekundäres oder tertiäres Kohlenstoffatom in unmittelbarer Nachbarschaft zur Aminogruppe aufweisen, sind N,N-Dimethylglycin und N-Methylalanin bevorzugt.

Besonders bevorzugt ist die Säure eine anorganische Säure.

Das Absorptionsmittel kann auch Additive, wie Korrosionsinhibitoren, Enzyme etc. enthalten. Im Allgemeinen liegt die Menge an derartigen Additiven im Bereich von etwa 0,01-3 Gew.-% des Absorptionsmittels.

Bevorzugt enthält das Absorptionsmittel kein sterisch ungehindertes primäres oder sekundäres Amin. Verbindungen dieser Art wirken als starke Promotoren der $CO_2$-Absorption. Durch ihre Anwesenheit kann die $H_2S$-Selektivität des Absorptionsmittels verloren gehen.

Unter einem sterisch ungehinderten primären oder sekundären Amin werden Verbindungen verstanden, die über primäre oder sekundäre Aminogruppen verfügen, an die lediglich Wasserstoffatome oder primäre Kohlenstoffatome gebunden sind.

Die Erfindung betrifft außerdem ein Verfahren zum Entfernen saurer Gase aus einem Fluidstrom, bei dem man den Fluidstrom mit dem oben definierten Absorptionsmittel in Kontakt bringt.

In der Regel regeneriert man das beladene Absorptionsmittel durch

a) Erwärmung,
b) Entspannung,
c) Strippen mit einem inerten Fluid

oder eine Kombination zweier oder aller dieser Maßnahmen.

Das erfindungsgemäße Verfahren ist geeignet zur Behandlung von Fluiden aller Art. Fluide sind einerseits Gase, wie Erdgas, Synthesegas, Koksofengas, Spaltgas, Kohlevergasungsgas, Kreisgas, Deponiegase und Verbrennungsgase, und andererseits mit dem Absorptionsmittel im Wesentlichen nicht mischbare Flüssigkeiten, wie LPG (Liquefied Petroleum Gas) oder NGL (Natural Gas Liquids). Das erfindungsgemäße Verfahren ist besonders zur Behandlung von kohlenwasserstoffhaltigen Fluidströmen geeignet. Die enthaltenen Kohlenwasserstoffe sind z. B. aliphatische Kohlenwasserstoffe, wie $C_{1-4}$-Kohlenwasserstoffe, wie Methan, ungesättigte Kohlenwasserstoffe, wie Ethylen oder Propylen, oder aromatische Kohlenwasserstoffe wie Benzol, Toluol oder Xylol.

Das erfindungsgemäße Verfahren bzw. Absorptionsmittel ist zur Entfernung von $CO_2$ und $H_2S$ geeignet. Neben Kohlendioxid und Schwefelwasserstoff können andere saure Gase im Fluidstrom vorhanden sein, wie COS und Mercaptane. Außerdem können auch $SO_3$, $SO_2$, $CS_2$ und HCN entfernt werden.

Das erfindungsgemäße Verfahren eignet sich zur selektiven Entfernung von Schwefelwasserstoff gegenüber $CO_2$. Unter "Selektivität für Schwefelwasserstoff" wird vorliegend der Wert des folgenden Quotienten verstanden:

$$\frac{\dfrac{y(H_2S)_{feed} - y(H_2S)_{treat}}{y(H_2S)_{feed}}}{\dfrac{y(CO_2)_{feed} - y(CO_2)_{treat}}{y(CO_2)_{feed}}}$$

worin $y(H_2S)_{feed}$ für den Stoffmengenanteil (mol/mol) von $H_2S$ im Ausgangsfluid, $y(H_2S)_{treat}$ für den Stoffmengenanteil im behandelten Fluid, $y(CO_2)_{feed}$ für den Stoffmengenanteil von $CO_2$ im Ausgangsfluid und $y(CO_2)_{treat}$ für den Stoffmengenanteil von $CO_2$ im behandelten Fluid steht.

In bevorzugten Ausführungsformen ist der Fluidstrom ein Kohlenwasserstoffe enthaltender Fluidstrom; insbesondere ein Erdgasstrom. Besonders bevorzugt enthält der Fluidstrom mehr als 1,0 Vol.-% Kohlenwasserstoffe, ganz besonders bevorzugt mehr als 5,0 Vol.-% Kohlenwasserstoffe, am meisten bevorzugt mehr als 15 Vol.-% Kohlenwasserstoffe.

Der Schwefelwasserstoff-Partialdruck im Fluidstrom beträgt üblicherweise mindestens 2,5 mbar. In bevorzugten Ausführungsformen liegt im Fluidstrom ein Schwefelwasserstoff-Partialdruck von mindestens 0,1 bar, insbesondere mindestens 1 bar, und ein Kohlendioxid-Partialdruck von mindestens 0,2 bar, insbesondere mindestens 1 bar, vor. Besonders bevorzugt liegt im Fluidstrom ein Schwefelwasserstoff-Partialdruck von mindestens 0,1 bar und ein Kohlendioxid-Partialdruck von mindestens 1 bar vor. Ganz besonders bevorzugt liegt im Fluidstrom ein Schwefelwasserstoff-Partialdruck von mindestens 0,5 bar und ein Kohlendioxid-Partialdruck von mindestens 1 bar vor. Die angegebenen Partialdrücke beziehen sich auf den Fluidstrom beim erstmaligen Kontakt mit dem Absorptionsmittel im Absorptionsschritt.

In bevorzugten Ausführungsformen liegt im Fluidstrom ein Gesamtdruck von mindestens 3,0 bar, besonders bevorzugt mindestens 5,0 bar, ganz besonders bevorzugt mindestens 20 bar vor. In bevorzugten Ausführungsformen liegt im Fluidstrom ein Gesamtdruck von höchstens 180 bar vor. Der Gesamtdruck bezieht sich auf den Fluidstrom beim erstmaligen Kontakt mit dem Absorptionsmittel im Absorptionsschritt.

Im erfindungsgemäßen Verfahren wird der Fluidstrom in einem Absorptionsschritt in einem Absorber in Kontakt mit dem Absorptionsmittel gebracht, wodurch Kohlendioxid und Schwefelwasserstoff zumindest teilweise ausgewaschen werden. Man erhält einen $CO_2$- und $H_2S$-abgereicherten Fluidstrom und ein $CO_2$- und $H_2S$-beladenes Absorptionsmittel.

Als Absorber fungiert eine in üblichen Gaswäscheverfahren eingesetzte Waschvorrichtung. Geeignete Waschvorrichtungen sind beispielsweise Füllkörper, Packungs- und Bodenkolonnen, Membrankontaktoren, Radialstromwäscher, Strahlwäscher, Venturi-Wäscher und Rotations-Sprühwäscher, bevorzugt Packungs-, Füllkörper- und Bodenkolonnen, besonders bevorzugt Boden- und Füllkörperkolonnen. Die Behandlung des Fluidstroms mit dem Absorptionsmittel erfolgt dabei bevorzugt in einer Kolonne im Gegenstrom. Das Fluid wird dabei im Allgemeinen in den unteren Bereich und das Absorptionsmittel in den oberen Bereich der Kolonne eingespeist. In Bodenkolonnen sind Sieb-, Glocken- oder Ventilböden eingebaut, über welche die Flüssigkeit strömt. Füllkörperkolonnen können mit unterschiedlichen Formkörpern gefüllt werden. Wärme- und Stoffaustausch werden durch die Vergrößerung der Oberfläche aufgrund der meist etwa 25 bis 80 mm großen Formkörper verbessert. Bekannte Beispiele sind der Raschig-Ring (ein Hohlzylinder), Pall-Ring, Hiflow-Ring, Intalox-Sattel und dergleichen. Die Füllkörper können geordnet, aber auch regellos (als Schüttung) in die Kolonne eingebracht werden. Als Materialien kommen in Frage Glas, Keramik, Metall und Kunststoffe. Strukturierte Packungen sind eine Weiterentwicklung der geordneten Füllkörper. Sie weisen eine regelmäßig geformte Struktur auf. Dadurch ist es bei Packungen möglich, Druckverluste bei der Gasströmung zu reduzieren. Es gibt verschiedene Ausführungen von Packungen z. B. Gewebe- oder Blechpackungen. Als Material können Metall, Kunststoff, Glas und Keramik eingesetzt werden.

Die Temperatur des Absorptionsmittels beträgt im Absorptionsschritt im Allgemeinen etwa 30 bis 100°C, bei Verwendung einer Kolonne beispielsweise 30 bis 70°C am Kopf der Kolonne und 50 bis 100°C am Boden der Kolonne.

Das erfindungsgemäße Verfahren kann einen oder mehrere, insbesondere zwei, aufeinander folgende Absorptionsschritte umfassen. Die Absorption kann in mehreren aufeinander folgenden Teilschritten durchgeführt werden, wobei das die sauren Gasbestandteile enthaltende Rohgas in jedem der Teilschritte mit jeweils einem Teilstrom des Absorptionsmittels in Kontakt gebracht wird. Das Absorptionsmittel, mit dem das Rohgas in Kontakt gebracht wird, kann bereits teilweise mit sauren Gasen beladen sein, d. h. es kann sich beispielsweise um ein Absorptionsmittel, das aus einem nachfolgenden Absorptionsschritt in den ersten Absorptionsschritt zurückgeführt wurde, oder um teilregeneriertes Absorptionsmittel handeln. Bezüglich der Durchführung der zweistufigen Absorption wird Bezug genommen auf die Druckschriften EP 0 159 495, EP 0 190 434, EP 0 359 991 und WO 00100271.

Das erfindungsgemäße Verfahren kann einen oder mehrere, insbesondere zwei, aufeinander folgende Absorptionsschritte umfassen. Die Absorption kann in mehreren aufeinander folgenden Teilschritten durchgeführt werden, wobei das die sauren Gasbestandteile enthaltende Rohgas in jedem der Teilschritte mit jeweils einem Teilstrom des Absorptionsmittels in Kontakt gebracht wird. Das Absorptionsmittel, mit dem das Rohgas in Kontakt gebracht wird, kann bereits teilweise mit sauren Gasen beladen sein, d. h. es kann sich beispielsweise um ein Absorptionsmittel, das aus einem nachfolgenden Absorptionsschritt in den ersten Absorptionsschritt zurückgeführt wurde, oder um teilregeneriertes Absorptionsmittel handeln. Bezüglich der Durchführung der zweistufigen Absorption wird Bezug genommen auf die Druckschriften EP 0 159 495, EP 0 190 434, EP 0 359 991 und WO 00100271.

Das Verfahren umfasst bevorzugt einen Regenerationsschritt, bei dem man das $CO_2$- und $H_2S$-beladene Absorptionsmittel regeneriert. Im Regenerationsschritt werden aus dem $CO_2$- und $H_2S$-beladenen Absorptionsmittel $CO_2$ und $H_2S$ und gegebenenfalls weitere saure Gasbestandteile freigesetzt, wobei ein regeneriertes Absorptionsmittel erhalten wird. Vorzugsweise wird das regenerierte Absorptionsmittel anschließend in den Absorptionsschritt zurückgeführt. In der Regel umfasst der Regenerationsschritt wenigstens eine der Maßnahmen Erwärmung, Entspannung und Strippen mit einem inerten Fluid.

Der Regenerationsschritt umfasst bevorzugt eine Erwärmung des mit den sauren Gasbestandteilen beladenen Absorptionsmittels, z. B. mittels eines Aufkochers, Naturumlaufverdampfers, Zwangsumlaufverdampfers, oder Zwangsumlaufentspannungsverdampfers. Die absorbierten Sauergase werden dabei mittels des durch Erhitzens der Lösung gewonnenen Wasserdampfes abgestrippt. Anstelle des Dampfes kann auch ein inertes Fluid, wie Stickstoff, verwendet werden. Der absolute Druck im Desorber liegt normalerweise bei 0,1 bis 3,5 bar, bevorzugt 1,0 bis 2,5 bar. Die Temperatur liegt normalerweise bei 50 °C bis 170 °C, bevorzugt bei 80 °C bis 130 °C, wobei die Temperatur natürlich vom Druck abhängig ist.

Der Regenerationsschritt kann alternativ oder zusätzlich eine Druckentspannung umfassen. Diese beinhaltet mindestens eine Druckentspannung des beladenen Absorptionsmittels von einem hohen Druck, wie er bei der Durchführung des Absorptionsschritts herrscht, auf einen niedrigeren Druck. Die Druckentspannung kann beispielsweise mittels eines Drosselventils und/oder einer Entspannungsturbine geschehen. Die Regeneration mit einer Entspannungsstufe ist beispielsweise beschrieben in den Druckschriften US 4,537, 753 und US 4,553, 984.

Die Freisetzung der sauren Gasbestandteile im Regenerationsschritt kann beispielsweise in einer Entspannungskolonne, z. B. einem senkrecht oder waagerecht eingebauten Flash-Behälter oder einer Gegenstromkolonne mit Einbauten, erfolgen.

Bei der Regenerationskolonne kann es sich ebenfalls um eine Füllkörper-, Packungs- oder Bodenkolonne handeln. Die Regenerationskolonne weist am Sumpf einen Aufheizer auf, z. B. einen Zwangsumlaufverdampfer mit Umwälzpumpe. Am Kopf weist die Regenerationskolonne einen Auslass für die freigesetzten Sauergase auf. Mitgeführte Absorptionsmitteldämpfe werden in einem Kondensator kondensiert und in die Kolonne zurückgeführt.

Es können mehrere Entspannungskolonnen hintereinander geschaltet werden, in denen bei unterschiedlichen Drücken regeneriert wird. Beispielsweise kann in einer Vorentspannungskolonne bei hohem Druck, der typischerweise etwa 1,5 bar oberhalb des Partialdrucks der sauren Gasbestandteile im Absorptionsschritt liegt, und in einer Hauptentspannungskolonne bei niedrigem Druck, beispielsweise 1 bis 2 bar absolut, regeneriert werden. Die Regeneration mit zwei oder mehr Entspannungsstufen ist beschrieben in den Druckschriften US 4,537, 753, US 4,553, 984, EP 0 159 495, EP 0 202 600, EP 0 190 434 und EP 0 121 109.

Wegen der optimalen Abstimmung des Gehalts an den Aminkomponenten und der Säure weist das erfindungsgemäße Absorptionsmittel eine hohe Beladbarkeit mit sauren Gasen auf, die auch leicht wieder desorbiert werden können. Dadurch können bei dem erfindungsgemäßen Verfahren der Energieverbrauch und der Lösungsmittelumlauf signifikant reduziert werden.

Für einen möglichst niedrigen Energiebedarf bei der Regeneration des Absorptionsmittels ist es von Vorteil, wenn eine möglichst große Differenz zwischen dem pH-Wert bei der Temperatur der Absorption und dem pH-Wert bei der Temperatur der Desorption vorliegt, da dies das Abtrennen der Sauergase vom Absorptionsmittel erleichtert.

Die Erfindung wird anhand der beigefügten Zeichnung und des nachfolgenden Beispiels näher veranschaulicht.

Fig. 1 ist eine schematische Darstellung einer zur Durchführung des erfindungsgemäßen Verfahrens geeigneten Anlage.

Gemäß Fig. 1 wird über die Zuleitung Z ein geeignet vorbehandeltes, Schwefelwasserstoff und Kohlendioxid

enthaltendes Gas in einem Absorber A1 mit regeneriertem Absorptionsmittel, das über die Absorptionsmittelleitung 1.01 zugeführt wird, im Gegenstrom in Kontakt gebracht. Das Absorptionsmittel entfernt Schwefelwasserstoff und Kohlendioxid durch Absorption aus dem Gas; dabei wird über die Abgasleitung 1.02 ein an Schwefelwasserstoff und Kohlendioxid abgereichertes Reingas gewonnen.

Über die Absorptionsmittelleitung 1.03, den Wärmetauscher 1.04, in dem das $CO_2$- und $H_2S$-beladene Absorptionsmittel mit der Wärme des über die Absorptionsmittelleitung 1.05 geführten, regenerierten Absorptionsmittels aufgeheizt wird, und die Absorptionsmittelleitung 1.06 wird das mit $CO_2$- und $H_2S$-beladene Absorptionsmittel der Desorptionskolonne D zugeleitet und regeneriert.

Zwischen Absorber A1 und Wärmetauscher 1.04 kann ein Entspannungsbehälter vorgesehen sein (in Fig. 1 nicht dargestellt) in dem das $CO_2$- und $H_2S$-beladene Absorptionsmittel auf z. B. 3 bis 15 bar entspannt wird.

Aus dem unteren Teil der Desorptionskolonne D wird das Absorptionsmittel in den Aufkocher 1.07 geführt, wo es erhitzt wird. Der hauptsächlich wasserhaltige Dampf wird in die Desorptionskolonne D zurückgeführt, während das regenerierte Absorptionsmittel über die Absorptionsmittelleitung 1.05, den Wärmetauscher 1.04, in dem das regenerierte Absorptionsmittel das $CO_2$- und $H_2S$-beladene Absorptionsmittel aufheizt und selbst dabei abkühlt, die Absorptionsmittelleitung 1.08, den Kühler 1.09 und die Absorptionsmittelleitung 1.01 dem Absorber A1 wieder zugeführt wird. Anstelle des gezeigten Aufkochers können auch andere Wärmetauschertypen zur Erzeugung des Strippdampfes eingesetzt werden, wie ein Naturumlaufverdampfer, Zwangsumlaufverdampfer, oder Zwangsumlaufentspannungsverdampfer. Bei diesen Verdampfertypen wird ein gemischtphasiger Strom aus regeneriertem Absorptionsmittel und Strippdampf in den Sumpf der Desorptionskolonne zurückgefahren, wo die Phasentrennung zwischen dem Dampf und dem Absorptionsmittel statt. Das regenerierte Absorptionsmittel zum Wärmetauscher 1.04 wird entweder aus dem Umlaufstrom vom Sumpf der Desorptionskolonne zum Verdampfer abgezogen, oder über eine separate Leitung direkt aus dem Sumpf der Desorptionskolonne zum Wärmetauscher 1.04 geführt.

Das in der Desorptionskolonne D freigesetzte $CO_2$- und $H_2S$-haltige Gas verlässt die Desorptionskolonne D über die Abgasleitung 1.10. Es wird in einen Kondensator mit integrierter Phasentrennung 1.11 geführt, wo es von mitgeführtem Absorptionsmitteldampf getrennt wird. In dieser und allen andern zur Durchführung des erfindungsgemäßen Verfahrens geeigneten Anlagen können Kondensator und Phasentrennung auch getrennt voneinander vorliegen. Anschließend wird eine hauptsächlich aus Wasser bestehende Flüssigkeit über die Absorptionsmittelleitung 1.12 in den oberen Bereich der Desorptionskolonne D geführt, und ein $CO_2$- und $H_2S$-haltiges Gas über die Gasleitung 1.13 ausgeführt.

Beispiele

In den Beispielen werden folgende Abkürzungen verwendet:

MDEA: Methyldiethanolamin
TBAEE: 2-(2-tert-Butylaminoethoxy)ethanol

Beispiel 1

Man bestimmte die Temperaturabhängigkeit des pH-Werts von wässrigen Aminlösungen bzw. teilneutralisierten Aminlösungen im Temperaturbereich von 20°C bis 120°C. Es wurde eine Druckapparatur verwendet, in der der pH-Wert bis 120°C gemessen werden kann.

In der nachstehenden Tabelle sind der pH(50°C), der pH(120°C) sowie die Differenz pH(50°C) - pH(120°C) angegeben.

| Bsp. | Zusammensetzung | b / a** | NG*** [%] | pH (50°C) | pH (120°C) | pH(50°C) - pH (120°C) |
|---|---|---|---|---|---|---|
| 1-1* | 40% MDEA | - | - | 11,01 | 9,58 | 1,43 |
| 1-2* | 40% MDEA + 0,5% $H_3PO_4$ | - | 5,02 | 9,76 | 8,29 | 1,47 |
| 1-3* | 40% MDEA + 6,2% TBAEE + 0,118% $H_2SO_4$ | 0,11 | 0,64 | 10,87 | 9,2 | 1,67 |
| 1-4* | 40% MDEA+ 6,2% TBAEE + 1,89% $H_2SO_4$ | 0,11 | 10,30 | 9,45 | 7,9 | 1,55 |
| 1-5 | 30% MDEA + 15% TBAEE + 0,3% $H_2SO_4$ | 0,37 | 1,77 | 10,57 | 8,83 | 1,74 |

(fortgesetzt)

| Bsp. | Zusammensetzung | b / a** | NG*** [%] | pH (50°C) | pH (120°C) | pH(50°C) - pH (120°C) |
|---|---|---|---|---|---|---|
| 1-6 | 30% MDEA + 15% TBAEE + 0,6% $H_2SO_4$ | 0,37 | 3,55 | 10,21 | 8,4 | 1,81 |
| 1-7 | 30% MDEA + 15% TBAEE + 0,8% $H_2SO_4$ | 0,37 | 4,73 | 9,89 | 8,16 | 1,73 |
| 1-8 | 30% MDEA + 15% TBAEE + 1,2% $H_2SO_4$ | 0,37 | 7,10 | 9,79 | 8,13 | 1,66 |
| 1-9* | 30% MDEA + 15% TBAEE + 1,6% $H_2SO_4$ | 0,37 | 9,46 | 9,77 | 7,9 | 1,87 |
| 1-10 | 30% MDEA + 15% TBAEE + 0,3% $H_3PO_4$ | 0,37 | 2,66 | 10,56 | 8,81 | 1,75 |
| 1-11 | 30% MDEA + 15% TBAEE + 0,8% $H_3PO_4$ | 0,37 | 7,10 | 10,21 | 8,49 | 1,72 |
| 1-12* | 30% MDEA + 15% TBAEE + 1,6% $H_3PO_4$ | 0,37 | 14,21 | 9,82 | 8,06 | 1,76 |
| * Vergleichsbeispiel<br>** molares Verhältnis von b / a<br>*** Neutralisationsgrad (bezogen auf TBAEE + MDEA) | | | | | | |

Es ist erkennbar, dass in den erfindungsgemäßen Beispielen eine größere Differenz zwischen den pH-Werten bei 50 und 120 °C vorliegt. Da die Absorption im Bereich von 50 °C und die Desorption bzw. Regeneration im Bereich von 120 °C erfolgt, ist die größere pH-Wert-Differenz ein Hinweis auf eine energetisch verbesserte Regeneration.

Beispiel 2

In einer Pilotanlage wurden für wässrige Absorptionsmittel die $CO_2$-Absorption und die bei der Regeneration eingebrachte Erwärmungsenergie bei einer definierten $H_2S$-Konzentration des gereinigten Gases untersucht.

Die Pilotanlage entsprach der Fig. 1. Im Absorber wurde eine strukturierte Packung verwendet. Es herrschte ein Druck von 60 bar. Die Packungshöhe im Absorber betrug 3,2 m bei einem Kolonnendurchmesser von 0,0531 m. Im Desorber wurde eine strukturierte Packung verwendet. Es herrschte ein Druck von 1,8 bar. Die Packungshöhe des Desorbers betrug 6,0 m bei einem Durchmesser von 0,085 m.

Ein Gasgemisch aus 93 Vol.-% $N_2$, 5 Vol.-% $CO_2$ und 2 Vol.-% $H_2S$ wurde mit einem Massenstrom von 47 kg/h und einer Temperatur von 40 °C in den Absorber geleitet. Im Absorber betrug die Absorptionsmittel-Umlaufrate von 60 kg/h. Die Temperatur des Absorptionsmittels betrug 50 °C. Die Regenerationsenergie wurde so eingestellt, dass eine $H_2S$-Konzentation von 5 ppm in dem gereinigten Gas erreicht wurde.

Die folgende Tabelle zeigt die Ergebnisse dieser Versuche:

| Bsp. | wässrige Zusammensetzung | y($CO_2$) am Absorberaustritt [Vol.-%] | Relative Regenerationsenergie** [%] |
|---|---|---|---|
| 2-1* | 40% MDEA | 1,87 | 100,0 |
| 2-2* | 40% MDEA + 0,5% $H_3PO_4$ | 1,89 | 73,3 |
| 2-3* | 30% MDEA + 15% TBAEE | 0,91 | 91,6 |
| 2-4 | 30% MDEA + 15% TBAEE + 0,8% $H_3PO_4$ | 0,99 | 57,8 |
| 2-5* | 30% MDEA + 15% TBAEE + 1,6% $H_3PO_4$ | 1,15 | 56,9 |
| 2-6 | 30% MDEA + 15% TBAEE + 0,6% $H_2SO_4$ | 1,54 | 65,1 |

(fortgesetzt)

| Bsp. | wässrige Zusammensetzung | $y(CO_2)$ am Absorberaustritt [Vol.-%] | Relative Regenerationsenergie** [%] |
|---|---|---|---|
| 2-7 | 30% MDEA + 15% TBAEE + 0,8% $H_2SO_4$ | 1,47 | 64,8 |
| 2-8 | 30% MDEA + 15% TBAEE + 1,2% $H_2SO_4$ | 1,50 | 64,1 |
| 2-9* | 30% MDEA + 15% TBAEE + 1,6% $H_2SO_4$ | 1,55 | 62,2 |
| * Vergleichsbeispiel<br>** bzgl. Beispiel 2-1* | | | |

Beim Vergleich des Vergleichsbeispiele 2-2* mit den Beispielen 2-4 bis 2-9 ist erkennbar, dass die Mitverwendung von TBAEE eine erhöhte $CO_2$-Absorption (geringere $CO_2$-Konzentration $y(CO_2)$ am Absorberaustritt) bei gleicher $H_2S$-Absorption bewirkt. Dabei bleibt die bei der Regeneration eingebrachte Erwärmungsenergie annähernd gleich bzw. sinkt. Der Vergleich von Vergleichsbeispiel 2-3* mit den Beispielen 2-6 bis 2-9 zeigt, dass der Zusatz von Säure die bei der Regeneration eingebrachte Erwärmungsenergie deutlich senkt. Da die $H_2S$-Konzentration im gereinigten Gas immer 5 ppm betrug, zeigen die Beispiele wie mittels Variation der Zusammensetzungen innerhalb der erfindungsgemäßen Grenzen die Einstellung einer definierten $H_2S$-Selektivität ermöglicht wird.

Beispiel 3:

Die Stabilität verschiedener wässriger Absorptionsmittel wurde untersucht.

Wässrige Lösungen mit einem MDEA- bzw. TBAEE-Gehalt gemäß der nachstehenden Tabelle und jeweils einer Beladung von 20 $Nm^3/t$(Absorptionsmittel) $CO_2$ und $H_2S$ wurden für 125 h auf einer Temperatur von 160 °C in einem geschlossenen Gefäß gehalten. Anschließend wurde der Gehalt an unzersetztem MDEA bestimmt und der Anteil an zersetztem MDEA berechnet.

Die Ergebnisse sind in der nachstehenden Tabelle zusammengefasst.

| Bsp. | MDEA [Gew.-%] | TBAEE [Gew.-%] | Säure | NG** [%] | zersetztes MDEA [%] |
|---|---|---|---|---|---|
| 3-1* | 35,7 | 12,1 | 3,7 Gew.-% $H_2SO_4$ | 20,1 | 20 |
| 3-2* | 35,7 | 12,1 | 2,0 Gew.-% $H_2SO_4$ | 10,9 | 19 |
| 3-3 | 35,7 | 12,1 | 1,0 Gew.-% $H_2SO_4$ | 5,4 | 14 |
| 3-4 | 35,7 | 12,1 | 0,5 Gew.-% $H_2SO_4$ | 2,7 | 8 |
| 3-5* | 35,7 | 12,1 | - | - | 2,5 |
| * Vergleichsbeispiel<br>** Neutralisationsgrad (bezogen auf TBAEE + MDEA) | | | | | |

Es ist ersichtlich, dass die Anwesenheit von Säure die Zersetzung von MDEA beschleunigt. Der Zersetzungsgrad ist abhängig von der Säuremenge, weshalb eine relativ niedrige Säuremenge wie in den erfindungsgemäßen Zusammensetzungen vorteilhaft ist.

## Patentansprüche

1. Verfahren zum Entfernen saurer Gase aus einem unter Gasen ausgewählten Fluidstrom, der einen Gesamtdruck von mindestens 3,0 bar aufweist, bei dem man den Fluidstrom mit einem Absorptionsmittel in Kontakt bringt, umfassend eine wässrige Lösung, umfassend:

   a) ein tertiäres Amin;
   b) ein sterisch gehindertes sekundäres Amin der allgemeinen Formel (I)

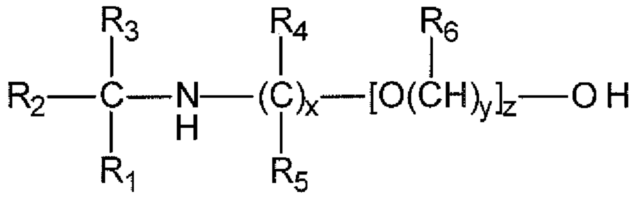

(I),

worin $R_1$ und $R_2$ jeweils unabhängig voneinander ausgewählt sind unter $C_{1-4}$-Alkyl und $C_{1-4}$-Hydroxyalkyl; $R_3$, $R_4$, $R_5$ und $R_6$ jeweils unabhängig voneinander ausgewählt sind unter Wasserstoff, $C_{1-4}$-Alkyl und $C_{1-4}$-Hydroxyalkyl, mit der Maßgabe, dass wenigstens ein Rest $R_4$ und/oder $R_5$ am Kohlenstoffatom, welches direkt an das Stickstoffatom gebunden ist, für $C_{1-4}$-Alkyl oder $C_{1-4}$-Hydroxyalkl steht, wenn $R_3$ Wasserstoff ist; x und y ganze Zahlen von 2 bis 4 sind und z eine ganze Zahl von 1 bis 4 ist; wobei das molare Verhältnis von b) zu a) im Bereich von 0,3 bis 0,7 liegt und

c) eine Säure in einer Menge, gerechnet als Neutralisationsäquivalente bezogen auf die protonierbaren Stickstoffatome in a) und b), von 1,0 bis 9,0%;

wobei im Fluidstrom ein Schwefelwasserstoff-Partialdruck von mindestens 0,1 bar und ein Kohlendioxid-Partialdruck von mindestens 0,2 bar vorliegt.

**2.** Verfahren nach Anspruch 1, wobei der Fluidstrom Kohlenwasserstoffe enthält.

**3.** Verfahren nach Anspruch 1 oder 2, wobei im Fluidstrom ein Schwefelwasserstoff-Partialdruck von mindestens 0,1 bar und ein Kohlendioxid-Partialdruck von mindestens 1,0 bar vorliegt.

**4.** Verfahren nach einem der Ansprüche 1 bis 3, wobei man das beladene Absorptionsmittel durch

a) Erwärmung,
b) Entspannung,
c) Strippen mit einem inerten Fluid

oder eine Kombination zweier oder aller dieser Maßnahmen regeneriert.

**5.** Absorptionsmittel zur selektiven Entfernung von Schwefelwasserstoff aus einem unter Gasen ausgewählten Fluidstrom, umfassend eine wässrige Lösung, umfassend:

a) ein tertiäres Amin;
b) ein sterisch gehindertes sekundäres Amin der allgemeinen Formel (I)

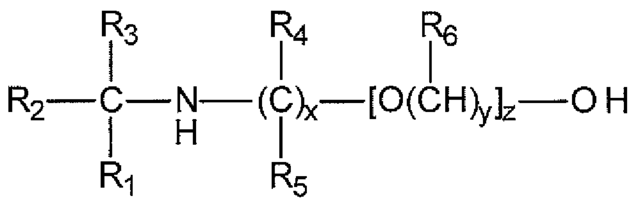

(I),

worin $R_1$ und $R_2$ jeweils unabhängig voneinander ausgewählt sind unter $C_{1-4}$-Alkyl und $C_{1-4}$-Hydroxyalkyl; $R_3$, $R_4$, $R_5$ und $R_6$ jeweils unabhängig voneinander ausgewählt sind unter Wasserstoff, $C_{1-4}$-Alkyl und $C_{1-4}$-Hydroxyalkyl, mit der Maßgabe, dass wenigstens ein Rest $R_4$ und/oder $R_5$ am Kohlenstoffatom, welches direkt an das Stickstoffatom gebunden ist, für $C_{1-4}$-Alkyl oder $C_{1-4}$-Hydroxyalkl steht, wenn $R_3$ Wasserstoff ist; x und y ganze Zahlen von 2 bis 4 sind und z eine ganze Zahl von 1 bis 4 ist; wobei das molare Verhältnis von b) zu a) im Bereich von 0,3 bis 0,7 liegt und

c) eine Säure in einer Menge, gerechnet als Neutralisationsäquivalente bezogen auf die protonierbaren Stickstoffatome in a) und b), von 1,0 bis 9,0%.

**6.** Absorptionsmittel nach Anspruch 5, wobei die Gesamtkonzentration von a) und b) in der wässrigen Lösung 10 bis 60 Gew.-% beträgt.

**7.** Absorptionsmittel nach Anspruch 5 oder 6, wobei das tertiäre Amin a) ein tertiäres Alkanolamin ist.

**8.** Absorptionsmittel nach Anspruch 7, wobei das tertiäre Amin a) Methyldiethanolamin ist.

**9.** Absorptionsmittel nach einem der vorhergehenden Ansprüche, wobei das sterisch gehinderte sekundäre Amin b) 2-(2-tert-Butylaminoethoxy)ethanol ist.

**10.** Absorptionsmittel nach einem der vorhergehenden Ansprüche, wobei die Säure c) ausgewählt ist unter anorganischen Säuren und organischen Säuren.

**11.** Absorptionsmittel nach Anspruch 10, wobei die organische Säure ausgewählt ist unter Phosphonsäuren, Sulfonsäuren, Carbonsäuren, tertiären Aminocarbonsäuren, N-sec-Alkyl-aminocarbonsäuren und N-tert-Alkyl-aminocarbonsäuren.

**12.** Absorptionsmittel nach Anspruch 10, wobei die die anorganische Säure ausgewählt ist unter Phosphorsäure und Schwefelsäure.

**Claims**

**1.** A process for removing acidic gases from a fluid stream selected from gases, which has a total pressure of at least 3.0 bar, in which the fluid stream is contacted with an absorbent, comprising an aqueous solution comprising:

a) a tertiary amine;
b) a sterically hindered secondary amine of the general formula (I)

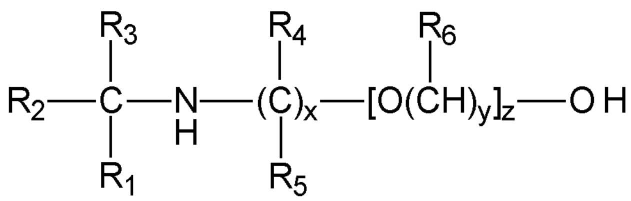

(I)

in which $R_1$ and $R_2$ are each independently selected from $C_{1-4}$-alkyl and $C_{1-4}$-hydroxyalkyl; $R_3$, $R_4$, $R_5$ and $R_6$ are each independently selected from hydrogen, $C_{1-4}$-alkyl and $C_{1-4}$-hydroxyalkyl, with the proviso that at least one $R_4$ and/or $R_5$ radical on the carbon atom bonded directly to the nitrogen atom is $C_{1-4}$-alkyl or $C_{1-4}$-hydroxyalkyl when $R_3$ is hydrogen; x and y are integers from 2 to 4 and z is an integer from 1 to 4; where the molar ratio of b) to a) is in the range from 0.3 to 0.7, and
c) an acid in an amount, calculated as neutralization equivalent relative to the protonatable nitrogen atoms in a) and b), of 1.0 to 9.0%;

wherein there is a partial hydrogen sulfide pressure of at least 0,1 bar and/or a partial carbon dioxide pressure of at least 0.2 bar in the fluid stream.

**2.** The process according to claim 1, wherein the fluid stream comprises hydrocarbons.

**3.** The process according to claim 1 or 2, wherein there is a partial hydrogen sulfide pressure of at least 0.1 bar and a partial carbon dioxide pressure of at least 1.0 bar in the fluid stream.

**4.** The process according to any of claims 1 to 3, wherein the laden absorbent is regenerated by

a) heating,
b) decompression,

c) stripping with an inert fluid

or a combination of two or all of these measures.

**5.** An absorbent for selective removal of hydrogen sulfide from a fluid stream selected from gases, comprising an aqueous solution comprising:

a) a tertiary amine;
b) a sterically hindered secondary amine of the general formula (I)

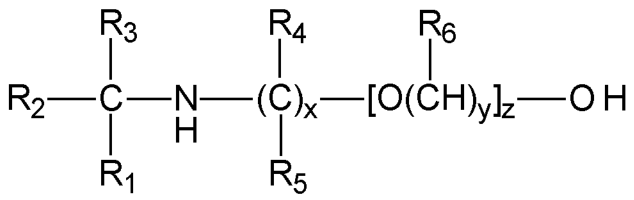

(I)

in which $R_1$ and $R_2$ are each independently selected from $C_{1-4}$-alkyl and $C_{1-4}$-hydroxyalkyl; $R_3$, $R_4$, $R_5$ and $R_6$ are each independently selected from hydrogen, $C_{1-4}$-alkyl and $C_{1-4}$-hydroxyalkyl, with the proviso that at least one $R_4$ and/or $R_5$ radical on the carbon atom bonded directly to the nitrogen atom is $C_{1-4}$-alkyl or $C_{1-4}$-hydroxyalkyl when $R_3$ is hydrogen; x and y are integers from 2 to 4 and z is an integer from 1 to 4; where the molar ratio of b) to a) is in the range from 0.3 to 0.7, and
c) an acid in an amount, calculated as neutralization equivalent relative to the protonatable nitrogen atoms in a) and b), of 1.0 to 9.0%.

**6.** The absorbent according to claim 5, wherein the total concentration of a) and b) in the aqueous solution is 10% to 60% by weight.

**7.** The absorbent according to claim 5 or 6, wherein the tertiary amine a) is a tertiary alkanolamine.

**8.** The absorbent according to claim 7, wherein the tertiary amine a) is methyldiethanolamine.

**9.** The absorbent according to any of the preceding claims, wherein the sterically hindered secondary amine b) is 2-(2-tert-butylaminoethoxy)ethanol.

**10.** The absorbent according to any of the preceding claims, wherein the acid c) is selected from inorganic acids and organic acids.

**11.** The absorbent according to claim 10, wherein the organic acid is selected from phosphonic acids, sulfonic acids, carboxylic acids, tertiary aminocarboxylic acids, N-sec-alkylaminocarboxylic acids and N-tert-alkylaminocarboxylic acids.

**12.** The absorbent according to claim 10, wherein the inorganic acid is selected from phosphoric acid and sulfuric acid.

## Revendications

**1.** Procédé d'élimination de gaz acides à partir d'un courant fluide choisi parmi les gaz, qui présente une pression totale d'au moins 3,0 bar, selon lequel le courant fluide est mis en contact avec un agent d'absorption, comprenant une solution aqueuse, comprenant :

a) une amine tertiaire ;
b) une amine secondaire à encombrement stérique de formule générale (I)

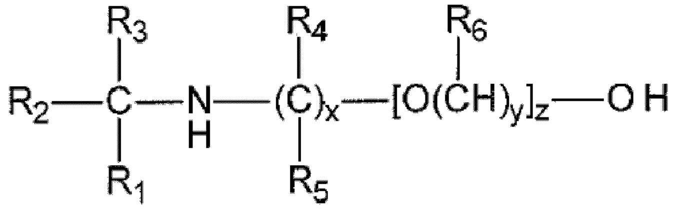

(I),

dans laquelle $R_1$ et $R_2$ sont chacun choisis indépendamment l'un de l'autre parmi un alkyle en $C_{1-4}$ et un hydroxyalkyle en $C_{1-4}$ ; $R_3$, $R_4$, $R_5$ et $R_6$ sont chacun choisis indépendamment les uns des autres parmi l'hydrogène, un alkyle en $C_{1-4}$ et un hydroxyalkyle en $C_{1-4}$, à condition qu'au moins un radical $R_4$ et/ou $R_5$ sur l'atome de carbone qui est relié directement à l'atome d'azote représente un alkyle en $C_{1-4}$ ou un hydroxyalkyle en $C_{1-4}$ lorsque $R_3$ représente l'hydrogène ; x et y sont des nombres entiers de 2 à 4, et z est un nombre entier de 1 à 4 ; le rapport molaire entre b) et a) se situant dans la plage allant de 0,3 à 0,7, et
c) un acide en une quantité, calculée en tant qu'équivalent de neutralisation par rapport aux atomes d'azote protonables dans a) et b), de 1,0 à 9,0 % ;

une pression partielle de sulfure d'hydrogène d'au moins 0,1 bar et une pression partielle de dioxyde de carbone d'au moins 0,2 bar étant présentes dans le courant fluide.

**2.** Procédé selon la revendication 1, dans lequel le courant fluide contient des hydrocarbures.

**3.** Procédé selon la revendication 1 ou 2, dans lequel une pression partielle de sulfure d'hydrogène d'au moins 0,1 bar et une pression partielle de dioxyde de carbone d'au moins 1,0 bar sont présentes dans le courant fluide.

**4.** Procédé selon l'une quelconque des revendications 1 à 3, dans lequel l'agent d'absorption chargé est régénéré par

a) chauffage,
b) détente,
c) extraction avec un fluide inerte,

ou une combinaison de deux ou de toutes ces mesures.

**5.** Agent d'absorption pour l'élimination sélective de sulfure d'hydrogène à partir d'un courant fluide choisi parmi les gaz, comprenant une solution aqueuse, comprenant :

a) une amine tertiaire ;
b) une amine secondaire à encombrement stérique de formule générale (I)

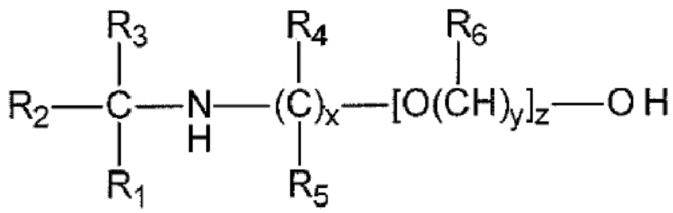

(I),

dans laquelle $R_1$ et $R_2$ sont chacun choisis indépendamment l'un de l'autre parmi un alkyle en $C_{1-4}$ et un hydroxyalkyle en $C_{1-4}$ ; $R_3$, $R_4$, $R_5$ et $R_6$ sont chacun choisis indépendamment les uns des autres parmi l'hydrogène, un alkyle en $C_{1-4}$ et un hydroxyalkyle en $C_{1-4}$, à condition qu'au moins un radical $R_4$ et/ou $R_5$ sur l'atome de carbone qui est relié directement à l'atome d'azote représente un alkyle en $C_{1-4}$ ou un hydroxyalkyle en $C_{1-4}$ lorsque $R_3$ représente l'hydrogène ; x et y sont des nombres entiers de 2 à 4, et z est un nombre entier de 1 à 4 ; le rapport molaire entre b) et a) se situant dans la plage allant de 0,3 à 0,7, et
c) un acide en une quantité, calculée en tant qu'équivalent de neutralisation par rapport aux atomes d'azote protonables dans a) et b), de 1,0 à 9,0 %.

6. Agent d'absorption selon la revendication 5, dans lequel la concentration totale de a) et b) dans la solution aqueuse est de 10 à 60 % en poids.

7. Agent d'absorption selon la revendication 5 ou 6, dans lequel l'amine tertiaire a) est une alcanolamine tertiaire.

8. Agent d'absorption selon la revendication 7, dans lequel l'amine tertiaire a) est la méthyldiéthanolamine.

9. Agent d'absorption selon l'une quelconque des revendications précédentes, dans lequel l'amine secondaire à encombrement stérique b) est le 2-(2-tert-butylaminoéthoxy)éthanol.

10. Agent d'absorption selon l'une quelconque des revendications précédentes, dans lequel l'acide c) est choisi parmi les acides inorganiques et les acides organiques.

11. Agent d'absorption selon la revendication 10, dans lequel l'acide organique est choisi parmi les acides phosphoniques, les acides sulfoniques, les acides carboxyliques, les acides aminocarboxyliques tertiaires, les acides N-sec-alkyl-aminocarboxyliques et les acides N-tert-alkyl-aminocarboxyliques.

12. Agent d'absorption selon la revendication 10, dans lequel l'acide inorganique est choisi parmi l'acide phosphorique et l'acide sulfurique.

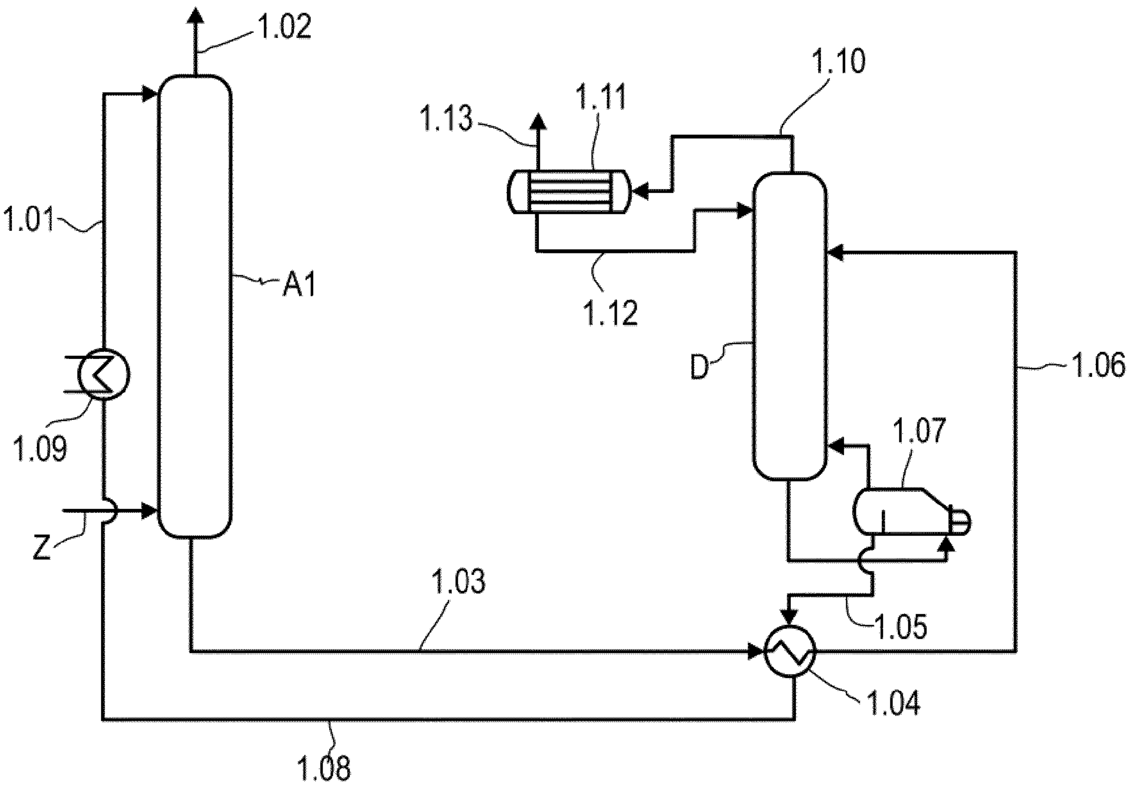


**Fig. 1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4471138 A
- EP 0084943 A
- EP 134948 A
- US 4618481 A
- US 4892674 A
- US 4101633 A
- US 4094957 A
- US 20130243676 A
- US 2010288125 A
- EP 0159495 A
- EP 0190434 A
- EP 0359991 A
- WO 00100271 A
- US 4537753 A
- US 4553984 A
- EP 0202600 A
- EP 0121109 A


### In der Beschreibung aufgeführte Nicht-Patentliteratur


- **LU et al.** *Separation and Purification Technology,* 2006, vol. 52, 209-217